# EUROPEAN PATENT SPECIFICATION

(11) **EP 1 230 183 B1**
(45) Date of publication and mention of the grant of the patent: **02.01.2004**
(21) Application number: 00970760.5
(22) Date of filing: 11.10.2000
(51) Int. Cl.: C03C 8/20, C03C 8/14, C03C 8/06

(54) **WATER-RESISTANT PORCELAIN ENAMEL COATINGS AND METHOD OF MANUFACTURING SAME**
WASSERBESTÄNDIGE PORZELLAN-EMAILLE-BESCHICHTUNGEN UND VERFAHREN ZU DEREN HERSTELLUNG
REVETEMENTS D'EMAIL DE PORCELAINE RESISTANT A L'EAU ET LEUR PROCEDE DE FABRICATION

(30) Priority: 12.10.1999 US 158819 P
(43) Date of publication of application: 14.08.2002
(73) Proprietor: AOS Holding Company, Wilmington, DE 19890 (US)
(72) Inventor: KNOEPPEL, Ray, O., Hartland, WI 53029 (US); WATERS, James, D., Florence, KY 41042 (US)
(74) Representative: Neill, Alastair William
(86) International application number: PCT/US2000/028048
(87) International publication number: WO 2001/027049

(56) References cited:
- EP-A- 0 453 897
- US-A- 4 265 929
- US-A- 4 624 934
- US-A- 5 855 747
- PATENT ABSTRACTS OF JAPAN vol. 013, no. 145 (C-583), 10 April 1989 (1989-04-10) & JP 63 307141 A (ASAHI GLASS CO LTD), 14 December 1988 (1988-12-14)
- PATENT ABSTRACTS OF JAPAN vol. 1997, no. 11, 28 November 1997 (1997-11-28) & JP 09 175833 A (ASAHI GLASS CO LTD), 8 July 1997 (1997-07-08)
- PATENT ABSTRACTS OF JAPAN vol. 006, no. 158 (C-120), 19 August 1982 (1982-08-19) & JP 57 077041 A (TOSHIBA GLASS CO LTD), 14 May 1982 (1982-05-14)
- PATENT ABSTRACTS OF JAPAN vol. 015, no. 413 (C-0877), 22 October 1991 (1991-10-22) & JP 03 170346 A (ASAHI GLASS CO LTD), 23 July 1991 (1991-07-23)
- DATABASE WPI Section Ch, Week 198118 Derwent Publications Ltd., London, GB; Class L01, AN 1981-31788D XP002158456 & JP 56 026744 A (MATSUSHITA ELECTRIC WORKS LTD), 14 March 1981 (1981-03-14)

## Description

The invention relates to porcelain enamel coatings, and particularly, to water-resistant porcelain enamel coatings for use in water heaters.

Porcelain enamel is subject to corrosion and dissolution by hot water. This can cause difficulties in applications such as hot water heaters. In a water heater, once the porcelain enamel coating protecting a metal substrate is dissolved through to the substrate, then the substrate corrodes rapidly and is perforated through. At this point the water heater must be replaced.

Attempts to improve the corrosion resistance of porcelain enamel have resulting in the use of various mill additions. However, mill additions that improve corrosion resistance tend to result in porcelain enamels that are subject to fish scaling or crazing.

Therefore, it would be desirable to have an improved porcelain enamel coating which is not only highly water-resistant, but also resists crazing or cracking.

EP 453897 (Bayer AG) discloses a metal-free, oxidic coating composition comprising at least one glass frit having a softening point of less than 480°C as a binder, one or more inorganic inert substances, and an adhesive which simultaneously acts as an oxidation catalyst, is used to coat metal substrates, in particular stainless steel, aluminium and aluminised steel, to form continuously self-cleaning coatings on inside walls of cookers, ovens and grills.

US 4624934 (Kokubu Yoshinori et al) discloses a ceramic composition for a multilayer printed wiring board, consisting of essentially of from 35% to 95% by weight of glass powder and from 5 to 65% by weight of refractory filler powder, said refractory filler powder being at least one member selected from the group consisting of .alpha.-quartz, corundum, zircon and zirconia and said glass powder consisting essentially of from 25% to 40% by weight of SiO₂, from 4% to 15% by weight of Al₂O₃, from 15% to 25% by weight of B₂O₃, from 15% to 40% by weight of BaO+CaO+MgO, from 1% to 10% by weight of ZnO and from 0.5% to 5% by weight of ZrO₂.

### SUMMARY OF THE INVENTION

It has been found that the use of mill additions containing a combination of zirconia compounds and silica improves the corrosion resistance of the porcelain enamel to hot water. In addition to good corrosion resistance, the coating adheres well to the metal substrate.

The invention provides a method of manufacturing a water-resistant porcelain enamel coating. The method comprises providing a ground glass; adding mill additions including silica and a zirconia compound to form a mixture; applying the mixture to a substrate; and firing the coated substrate to form the porcelain enamel coating. The resulting coating has good water-resistance properties, good adhesion to the substrate, and minimal cracking. Therefore, this coating is useful, for example, to increase the life of water heaters.

The invention also provides a porcelain enamel coating prepared by the above process, and a water heater coated with the porcelain enamel.

Other features and advantages of the invention will become apparent to those skilled in the art upon review of the following detailed description and claims.

### DETAILED DESCRIPTION OF THE INVENTION

Before embodiments of the invention are explained in detail, it is to be understood that the invention is not limited in its application to the details of the composition or concentration of components or to the steps or acts set forth in the following description. The invention is capable of other embodiments and of being practiced or being carried out in various ways. Also, it is understood that the phraseology and terminology used herein is for the purpose of description and should not be regarded as limiting.

Processes of making porcelain enamel coatings are well known in the art. The process generally includes blending inorganic minerals and smelting the blend to form a red hot molten mixture. The molten mixture is poured from the smelter and quenched, for example, between water cooled rollers. The ribbon of glass may then be shattered to form glass frit.

The resulting frit (or glass) may then be ground, for example, in a ball mill to reduce the frit to a predetermined particle size for the desired application. The grinding may be carried out wet or dry; typically, the grinding is carried out using water as the suspending medium.

Various mill additions may be added to the ground frit. Typical mill additions include suspending agents, electrolytes, refractories, colors and opacifiers, and/or bisque strengtheners. The resulting mixture may then be applied to a substrate by any one of various application methods customary in the art, such as, brushing, dipping, spraying, etc. The coated substrate is then fired in a conventional furnace at a temperature at which the glass frit softens, but below the melting point of the metal substrate. Upon cooling, the vitreous enamel layer hardens to adhere to the substrate.

More specifically, the porcelain enamel coating of the invention may be prepared by providing ground glass; adding to the ground glass mill additions including a zirconia compound and silica (SiO₂) to form a mixture, applying the mixture to a metal substrate, and firing to form a porcelain enamel coating. In order to improve the water resistance of the porcelain enamel, a balance must be achieved between reducing the size and quantity of undesirable voids in the coating which facilitate corrosion, and maintaining sufficient bubble structure to avoid cracking or crazing. Hydrogen gas tends to escape from coated steel substrates which can cause cracking and crazing in coatings with insufficient bubble structure. This balance may be achieved with mill additions including an appropriate combination of a) silica and b) a zirconia compound.

The form of the silica or zirconia compound mill additions is not significant. Regarding the silica mill additions, silica (SiO₂) and silicon carbide (SiC) may be suitable; silica is preferred. The silica mill addition is preferably present in an amount of greater than approximately 15 parts per hundred parts frit; more preferably greater than about 25 parts per hundred parts frit. All parts are given by weight unless otherwise indicated. The silica mill addition is preferably present in an amount less than about 60 parts per hundred parts frit; more preferably less than about 50 parts per hundred parts frit.

The mill additions of a zirconia compound are preferably added in an amount of greater than approximately 10 parts per hundred parts frit based on the total weight of the mixture. The zirconia compounds are preferably added in an amount less than about 40 parts per hundred parts frit; more preferably less than about 30 parts per hundred parts frit. The combined total parts of the silica and zirconia compound mill additions is preferably less than about 70; the combined total parts is preferably greater than about 25 parts per hundred parts frit, more preferably greater than about 35 parts per hundred parts frit.

With respect to the zirconia compounds, zircon (ZrO₂^{·}SiO₂) and zirconia (ZrO₂) may be suitable. Zircon is preferred. Employing finer particle sizes of the zirconia compound may permit an increase in the quantity of zirconia compound which may be employed. This, in turn, may increase the water resistance of the coating. Particle sizes of 200 mesh or finer are preferred.

Other mill additions may also be included, such as clay, magnesium carbonate, sodium nitrite, borax, boric acid, potassium phosphate, potassium silica fluoride, or other mill additions customary for a particular application. Such mill additions are typically added in an amount of approximately 1 to 32 parts per 100 parts frit and are generally added to improve the workability of the coating before firing. Clay in an amount of about 5 weight percent (based on the total weight of the mixture) is preferred.

The glass frit may be any of the well-known compositions used for making vitreous porcelain enamel. However, it has been found preferable to use a borosilicate glass frit and particularly an alkaline earth borosilicate frit, such as a sodium borosilicate glass. The glass is preferably lead-free.

Optionally, the composition of the glass frit may be modified to have lower water soluability by decreasing the fluorine and calcium contents, and by increasing the lithium content. Specifically, a glass system comprising primarily silica (SiO₂), Na₂O and zirconia (ZrO₂) with several additional oxides, may be modified to decrease the F₂ content, decrease the CaO content and increase the Li₂O content. For example, a desirable ground glass system comprises about 52 weight percent SiO₂, about 17 weight percent Na₂O, about 10 weight percent ZrO₂, less than about 4.1 weight percent F₂, less than about 0.005 weight percent CaO, and greater than about 4.1 weight percent Li₂O.

The mixture of frit and mill additions is applied to a substrate. The substrate is a metal and is preferably a steel. Most preferably, the substrate is a water heater. A preferred class of deposition techniques includes wet deposition techniques wherein the components of the coating are put into a liquid suspension, or "slip", and then applied to the substrate using various wet application methods. For enamels being applied by a wet process, water is preferably used as the suspension medium. The coating thickness should be thin enough to permit gas to escape from the substrate. Thicknesses of about 9 to about 11 mils are typical.

After applying the mixture to the substrate, it is fired. The particular firing temperature utilized depends upon the softening temperature of a particular glass frit used. Higher firing temperatures generally increase the water resistance of the resulting porcelain enamels; however, higher temperatures also lead to fewer bubbles and tend to increase brittleness. In the present method, the firing temperature is preferably at least about 1000°F (538°C); more preferably at least about 1400°F (760°C) and most preferably at least about 1550°F (843°C). The firing temperature is preferably less than about 1700° F (927°C); more preferably less than about 1650° F (899°C).

### EXAMPLE 1:

A borosilicate glass frit is prepared having the following oxide content by weight.

| OXIDE CONTENT OF GLASS FRIT | |
|---|---|
| Al₂O₃ | 0.5 |
| B₂O₃ | 7.4 |
| BaO | 0.003 |
| CaO | 0.003 |
| CoO | 0.5 |
| CuO | 0.2 |
| F₂ | 4.09 |
| Fe₂O₃ | 0.05 |
| K₂O | 0.007 |
| Li₂O | 5.2 |
| MnO | 0.9 |
| Na₂O | 17.1 |
| NiO | 0.1 |
| SiO₂ | 52.3 |
| TiO₂ | 1.1 |
| ZnO | 0.3 |
| ZrO₂ | 10.2 |

The frit is ground, and to 1000 parts of frit are added the following mill additions. Parts are given by weight. Weight percent is based on the total weight of the dry mixture of frit and mill additions.

| Mill Addition | Parts | Weight % |
|---|---|---|
| Silica Flour | 400 | 23.7 |
| Zircon | 200 | 11.9 |
| Ball Clay | 75 | 4.5 |
| Bentonite | 3.5 | 0.2 |
| Magnesium Carbonate | 2 | 0.1 |
| Sodium Nitrite | 1 | 0.06 |
| 10 Mol Borax | 4 | 0.2 |

A slip is prepared by mixing the above ingredients with 25-30 weight percent water (based on the total weight of the slip solution). The slip is sprayed onto a steel substrate to a thickness from 30-60 grams dry per square foot of substrate. The sample is then fired to reach temperatures above 1500°F (816°C) for about 4 minutes with a maximum temperature of 1650°F (899°C). Water resistance of the resulting sample was tested by immersing the sample in a bath of 2% tetrasodium pyrophosphate at 205°F (96°C) for 56 days. The area of the porcelain enamel exposed was 5.4 square inches. The 20Zr/40Si coating had a weight loss of 0.09 grams. By comparison, the same area of commercial glass having silica mill additions and no zircon mill additions had a weight loss of 0.28 grams when subjected to the same test conditions.

### EXAMPLE 2:

A porcelain enamel coating is prepared as described in Example 1 above except the zirconia compound and silica content from the mill additions is as indicated on Table 1 below.

Table 1 shows the results of employing various quantities of silica (SiO₂) (represented as Si in Table 1) and zircon (ZrO₂^{·}SiO₂) (represented as Zr in Table 1). The quantities are in parts by weight per 100 parts glass frit.

**TABLE 1**

| Mill Additions (Parts/100 Parts Frit) | % Bubble Content | Average of eight views: Maximum bubble size in each microscope view | Water Resistance of Coating |
|---|---|---|---|
| 10 Zr/45 Si | 11.3% | 0.0025 mm² | 0.0093 g |
| 20 Zr/30 Si | 11.3% | 0.0027 mm² | 0.0068 g |
| 30 Zr/15 Si | 10.5% | 0.0018 mm² | 0.0091 g |
| | | | |

| Comparative Examples: | | | |
|---|---|---|---|
| 60 Si | 15.3% | 0.0058 mm² | 0.0122 g |
| 30 Zr/60 Si | Inadequate adhesion | | |
| 40 Zr/40 Si | Inadequate adhesion | | |
| 40 Zr | 2.6% | 0.0005 mm² | 0.0099 g |

Percent bubble content is measured by image analysis of cross-sections of the glass coating. Water resistance is determined by immersing the coated part in a bath of 2% tetrasodium pyrophosphate at 205°F (96°C) for 11 days and then measuring weight loss (in grams). A smaller weight loss is preferred. The area of the porcelain enamel exposed for all samples was 5.4 square inches. By comparison, a commercially available water heater glass (having no zircon mill additions) tested under the same conditions was found to have a weight loss of 0.0238 grams; over two times greater weight loss than the improved coating of the present invention.

As shown by the comparative examples, a mill addition containing silica and no zirconia compound leads to poor adhesion and relatively large bubbles. On the other hand, using mill additions with a zirconia compound and no silica compound tends to result in poor fish scale resistance.

Table 1 shows that zircon suppresses bubble or void formation. The compositions having a greater zircon content as a mill addition desirably exhibited a smaller percentage of bubble content and a smaller average bubble size. Surprisingly, when silica is used in combination with zirconia as a mill addition, the relative water resistance of the resulting porcelain enamel is greater than the water resistance of a porcelain enamel made using mill additions of either silica alone or zircon alone. This synergy is most noticeable when silica is present in an amount of 15-45 parts per hundred parts frit while zirconia is present in an amount of approximately 10-30 parts per hundred parts frit.

## Claims

1. A method of manufacturing water-resistant porcelain enamel coating, the method comprising:
providing ground glass;
adding mill additions to the ground glass to form a mixture, wherein the mill additions comprise silica and a zirconia compound;
applying the mixture to a metal substrate to form a coated substrate; and
firing the coated substrate to form the porcelain enamel coating.

2. The method of claim 1 wherein the ground glass is provided by grinding a glass system.

3. The method of claim 1 wherein the ground glass comprises a borosilicate glass.

4. The method of claim 1 wherein the silica and zirconia compound mill additions comprise at least 25 parts per hundred parts ground glass.

5. The method of claim 1 wherein the silica and zirconia compound mill additions comprise at most 70 parts per hundred parts ground glass.

6. The method of claim 1 wherein the zirconia compound comprises zircon (ZrO₂^{·}SiO₂) or zirconia (ZrO₂).

7. The method of claim 1 wherein the mixture comprises from 15 to 50 parts of the silica mill addition per hundred parts of the ground glass.

8. The method of claim 1 wherein the mixture comprises at least 10 parts of the zirconia compound mill addition per hundred parts of the ground glass.

9. The method of claim 1 wherein the mill additions further comprise a clay.

10. The method of claim 1 wherein the metal substrate comprises steel.

11. The method of claim 1 wherein the metal substrate is a water heater.

12. The method of claim 1 wherein the coated substrate is fired at a temperature of 538 to 927°C.

13. The method of claim 1 wherein the coated substrate is fired at a temperature of 843 to 899°C.

14. The porcelain enamel coating manufactured by the method of claim 1.

15. The method of claim 1 wherein the ground glass comprises:
52 weight percent SiO₂,
17 weight percent Na₂O,
10 weight percent ZrO₂,
less than 4.1 weight percent F₂,
less than 0.005 weight percent CaO, and
greater than 4.1 weight percent Li₂O.

16. The method of manufacturing a porcelain enamel coating of claim 1, wherein the ground glass comprises:
borosilicate glass;
the mill additions comprise (a) a zirconia compound constituting at least 10 parst per hundred parts ground glass and (b) a silica compound;
the metal substrate is at least a portion of a water heater; and
the firing takes place at a temperature of 538°C to 927°C.

17. The method of claim 16 wherein the zirconia compound comprises zircon (ZrO₂^{·}SiO₂) or zirconia (ZrO₂).

18. The method of claim 16 wherein the mixture comprises from 15 to 50 parts of the silica compound mill addition and from 10 to 30 parts of the zirconia compound mill addition per 100 parts of the ground glass.

19. The water heater coated by the method of claim 16.

20. A porcelain enamel coating prepared by a process comprising:
providing a ground borosilicate glass;
adding mill additions to the ground glass to form a mixture, wherein the mill additions comprise (a) a zirconia compound constituting at least 10 parts per hundred parts ground glass and (b) a silica compound;
applying the mixture to a metal substrate; and
firing the metal substrate at a temperature of 538° to 927°C to form the porcelain enamel coating.

## Patentansprüche

1. verfahren zur Herstellung eines wasserbeständigen Porzellanemailleüberzugs, wobei das verfahren aufweist:
Bereitstellen eines Glasmehls;
Hinzufügen von Mahlzusätzen zum Glasmehl zur Bildung eines Gemisches, wobei die Mahlzusätze Kieselerde und einen Zirkonerdeverbund enthalten;
Auftragen des Gemisches auf ein Metallsubstrat, um ein beschichtetes Substrat zu bilden, und
Brennen des beschichteten Substrats zur Bildung des Porzellanemailleüberzugs.

2. Verfahren nach Anspruch 1, **dadurch gekennzeichnet, dass** das Glasmehl durch Schleifen eines Glassystems hergestellt wird.

3. verfahren nach Anspruch 1, **dadurch gekennzeichnet, dass** das Glasmehl ein Borosilikatglas aufweist.

4. Verfahren nach Anspruch 1, **dadurch gekennzeichnet, dass** die Mahlzusätze aus Kieselerde und Zirkonerdeverbund mindestens 25 Teile pro Hundert Teile Glasmehl aufweisen.

5. Verfahren nach Anspruch 1, **dadurch gekennzeichnet, dass** die Mahlzusätze aus Kieselerde und zirkonerdeverbund höchstens 70 Teile pro Hundert Teile Glasmehl aufweisen.

6. Verfahren nach Anspruch 1, **dadurch gekennzeichnet, dass** der Zirkonerdeverbund Zirkoniumsilikat (ZrO₂^{·}SiO₂) oder zirkoniumdioxid (ZrO₂) enthält.

7. Verfahren nach Anspruch 1, **dadurch gekennzeichnet, dass** das Gemisch 15 bis 50 Teile des Mahlzusatzes aus Kieselerde pro Hundert Teile Glasmehl enthält.

8. verfahren nach Anspruch 1, **dadurch gekennzeichnet, dass** das Gemisch mindestens 10 Teile des Mahlzusatzes aus Zirkonerdeverbund pro Hundert Teile Glasmehl enthält.

9. Verfahren nach Anspruch 1, **dadurch gekennzeichnet, dass** die Mahlzusätze außerdem Ton enthalten.

10. Verfahren nach Anspruch 1, **dadurch gekennzeichnet, dass** das Metallsubstrat aus Stahl besteht.

11. Verfahren nach Anspruch 1, **dadurch gekennzeichnet, dass** das Metallsubstrat ein Wassererhitzer ist.

12. Verfahren nach Anspruch 1, **dadurch gekennzeichnet, dass** das beschichtete Substrat bei einer Temperatur von 538 bis 927 °C gebrannt wird.

13. Verfahren nach Anspruch 1, **dadurch gekennzeichnet, dass** das beschichtete Substrat bei einer Temperatur von 843 bis 899 °C gebrannt wird.

14. Porzellanemailleüberzug, hergestellt nach dem Verfahren nach Anspruch 1.

15. Verfahren nach Anspruch, 1 **dadurch gekennzeichnet, dass** das Glasmehl aufweist:
52 Gew. % SiO₂,
17 Gew. % Na₂O,
10 Gew. % ZrO₂,
weniger als 4,1 Gew. % F₂,
weniger als 0,005 Gew. % CaO, und
mehr als 4,1 Gew. % Li₂O.

16. Verfahren zur Herstellung eines Porzellanemailleüberzugs nach Anspruch 1, **dadurch gekennzeichnet, dass** das Glasmehl ein Borosilikatglas aufweist,
dass die Mahlzusätze (a) einen Zirkonerdeverbund, der mindestens 10 Teile pro Hundert Teile Glasmehl enthält, und (b) einen Kieselerdeverbund aufweisen;
das Metallsubstrat mindestens einen Teil eines Wassererhitzers bildet und
das Brennen bei einer Temperatur von 538 °C bis 927 °C erfolgt.

17. verfahren nach Anspruch 16, **dadurch gekennzeichnet, dass** der Zirkonerdeverbund Zirkoniumsilikat (ZrO₂^{·}SiO₂) oder Zirkoniumdioxid (ZrO₂) enthält.

18. Verfahren nach Anspruch 16, **dadurch gekennzeichnet, dass** das Gemisch 15 bis 50 Teile des Mahlzusatzes aus Kieselerdeverbund und 10 bis 30 Teile des Mahlzusatzes aus Zirkonerdeverbund pro 100 Teile Glasmehl aufweist.

19. Wassererhitzer, beschichtet nach dem Verfahren gemäß Anspruch 16.

20. Porzellanemailleüberzug, hergestellt durch einen Prozess, der aufweist:
Bereitstellen eines Borosilikatglasmehls;
Hinzufügen von Mahlzusätzen zum Glasmehl zur Bildung eines Gemisches, wobei die Mahlzusätze (a) einen Zirkonerdeverbund, der mindestens 10 Teile pro Hundert Teile Glasmehl enthält, und (b) einen Kieselerdeverbund aufweisen;
Auftragen des Gemisches auf ein Metallsubstrat, und
Brennen des Metallsubstrats bei einer Temperatur von 538 °C bis 927 °C zur Bildung des Porzellanemailleüberzugs.

## Revendications

1. Procédé de fabrication d'un revêtement d'émail de porcelaine résistant à l'eau, le procédé comprenant :
la fourniture de verre broyé ;
l'addition d'additifs de broyage au verre broyé pour former un mélange, les additifs de broyage comprenant de la silice et un composé d'oxyde de zirconium ;
l'application du mélange à un substrat métallique pour former un substrat revêtu ; et
la cuisson du substrat revêtu pour former un revêtement d'émail de porcelaine.

2. Procédé selon la revendication 1, dans lequel le verre broyé est fourni par broyage d'un système de verre.

3. Procédé selon la revendication 1, dans lequel le verre broyé comprend un verre de borosilicate.

4. Procédé selon la revendication 1, dans lequel les additifs de broyage de silice et de composé d'oxyde de zirconium représentent au moins 25 parties pour 100 parties de verre broyé.

5. Procédé selon la revendication 1, dans lequel les additifs de broyage de silice et de composé d'oxyde de zirconium représentent au plus 70 parties pour 100 parties de verre broyé.

6. Procédé selon la revendication 1, dans lequel le composé d'oxyde de zirconium comprend du zircon (ZrO₂•SiO₂) et de l'oxyde de zirconium (ZrO₂).

7. Procédé selon la revendication 1, dans lequel le mélange comprend de 15 à 50 parties d'additif de broyage de silice pour 100 parties de verre broyé.

8. Procédé selon la revendication 1, dans lequel le mélange comprend au moins 10 parties d'additif de broyage de composé d'oxyde de zirconium pour 100 parties de verre broyé.

9. Procédé selon la revendication 1, dans lequel les additifs de broyage comprennent, en outre, une argile.

10. Procédé selon la revendication 1, dans lequel le substrat métallique est constitué d'acier.

11. Procédé selon la revendication 1, dans lequel le substrat métallique est un réchauffeur d'eau.

12. Procédé selon la revendication 1, dans lequel le substrat revêtu est cuit à une température comprise entre 538 et 927°C.

13. Procédé selon la revendication 1, dans lequel le substrat revêtu est cuit à une température comprise entre 843 et 899°C.

14. Revêtement d'émail de porcelaine fabriqué par le procédé selon la revendication 1.

15. Procédé selon la revendication 1, dans lequel le verre broyé comprend :
52 % en poids de SiO₂,
17 % en poids de Na₂O,
10 % en poids de ZrO₂,
moins de 4,1 % en poids de F₂,
moins de 0,005 % en poids de CaO, et
plus de 4,1 % en poids de Li₂O.

16. Procédé de fabrication d'un revêtement d'émail de porcelaine selon la revendication 1, dans lequel le verre broyé comprend :
du verre de borosilicate ;
les additifs de broyage comprennent (a) un composé d'oxyde de zirconium représentant au moins 10 parties pour 100 parties de verre broyé et (b) un composé de silice ;
le substrat métallique étant au moins une portion d'un réchauffeur d'eau ;
la cuisson se déroulant à une température comprise entre 538°C et 927°C.

17. Procédé selon la revendication 16, dans lequel le composé d'oxyde de zirconium comprend du zircon (ZrO₂•SiO₂) ou de l'oxyde de zirconium (ZrO₂).

18. Procédé selon la revendication 16, dans lequel le mélange comprend de 15 à 50 parties de composé de silice comme additif de broyage et de 10 à 30 parties de composé d'oxyde de zirconium comme additif de broyage pour 100 parties de verre broyé.

19. Réchauffeur d'eau revêtu par le procédé selon la revendication 16.

20. Revêtement d'émail de porcelaine préparé par un procédé comprenant :
la fourniture de verre de borosilicate broyé ;
l'adjonction d'additifs de broyage au verre broyé pour former un mélange, les additifs de broyage comprenant (a) un composé d'oxyde de zirconium représentant au moins 10 parties pour 100 parties de verre broyé et (b) un composé de silice ;
l'application du mélange à un substrat métallique ; et
la cuisson du substrat métallique à une température comprise entre 538°C et 927°C pour former le revêtement d'émail de porcelaine.
